# FASCICULE DE BREVET EUROPEEN

(11) **EP 3 169 197 B1**
(45) Date de publication et mention de la délivrance du brevet: **03.04.2019**
(21) Numéro de dépôt: 15759850.9
(22) Date de dépôt: 17.07.2015
(51) Int. Cl.: A47J 19/02

(54) **DISPOSITIF DE PRÉPARATION D'ALIMENTS POUR EXTRAIRE DES JUS PAR PRESSAGE**
LEBENSMITTELZUBEREITUNGSVORRICHTUNG ZUR EXTRAKTION VON SÄFTEN DURCH PRESSEN
FOOD PREPARATION DEVICE FOR EXTRACTING JUICES BY PRESSING

(30) Priorité: 18.07.2014 FR 1456992
(43) Date de publication de la demande: 24.05.2017
(73) Titulaire: SEB S.A., 69130 Ecully (FR)
(72) Inventeur: LE GRAND, Olivier, 21380 Messigny et Vantoux (FR)
(74) Mandataire: Bourrières, Patrice
(86) Numéro de dépôt international: PCT/FR2015/051980
(87) Numéro de publication internationale: WO 2016/009164

(56) Documents cités:
- CN-U- 202 739 657
- US-A1- 2014 033 934

## Description

La présente invention concerne le domaine technique des dispositifs de préparation d'aliments pour extraire les jus par pressage avec une vis de pressage.

La présente invention concerne notamment, mais non exclusivement, les appareils électroménagers de préparation culinaire comportant un boîtier motorisé portant un accessoire amovible formant un dispositif de préparation d'aliments du type précité. La présente invention concerne également les accessoires amovibles du type précité.

Il est connu dans l'art antérieur des appareils d'extraction de jus avec une vis de pressage, en particulier celui décrit par le document WO2014000335A1. En contrepartie, ce type d'appareil présente notamment l'inconvénient de requérir de la part de l'utilisateur un effort de poussée important à exercer sur les aliments à presser, pour les forcer à être travaillés par la vis de pressage.

En effet, pour entrer dans l'espace de travail sous la goulotte d'alimentation occupé par la vis de pressage, les aliments à presser doivent être déchiquetés pour ensuite être poussés vers un filtre. L'utilisateur doit donc exercer un effort important, en particulier si les aliments à presser sont solides, tels que des pommes par exemple.

Il en résulte une limitation d'utilisation qui empêche de pouvoir travailler des fruits complets, ce qui impose une préparation préliminaire à l'utilisateur qui doit couper les fruits en question préalablement à leur introduction dans l'appareil d'extraction de jus. Le document CN202739657U décrit également un dispositif de préparation d'aliments.

Un but de la présente invention est de répondre aux inconvénients de l'art antérieur mentionnés ci-dessus et en particulier, tout d'abord, de proposer un dispositif de préparation d'aliments pour extraire les jus qui permet de travailler des fruits complets ou avec une résistance mécanique importante, sans pour autant nécessiter un effort de poussée important de la part de l'utilisateur.

Pour cela un premier aspect de l'invention concerne un dispositif de préparation d'aliments tel que décrit dans la revendication 1, comprenant :
- une goulotte d'alimentation, et
- un outil d'extraction de jus agencé pour tourner en rotation autour d'un axe de rotation, avec une partie formant une vis de pressage avec au moins un filet de pressage formé à la surface de la vis de pressage agencé pour entraîner des aliments à presser d'une première portion de l'outil d'extraction de jus vers une deuxième portion de l'outil d'extraction de jus,
la goulotte d'alimentation présentant une partie inférieure qui débouche autour de l'axe de rotation,
du fait que l'outil d'extraction de jus comprend, en amont de la première portion de l'outil d'extraction de jus, un premier étage formant une vis de forage avec au moins un filet de forage formé à la surface de la vis de forage agencé pour forer et disloquer des aliments venant de la goulotte d'alimentation et les guider de la goulotte d'alimentation vers la vis de pressage, que ledit au moins un filet de pressage est distinct dudit au moins un filet de forage, et que l'outil d'extraction de jus comprend au moins un bord d'attaque entre ledit au moins un filet de forage et ledit au moins un filet de pressage.

Le dispositif de préparation d'aliments selon la mise en oeuvre ci-dessus comprend un outil d'extraction de jus qui a une vis de pressage, mais également une vis de forage, en amont de la vis de pressage et sur laquelle débouche la goulotte d'alimentation. Ainsi les aliments à presser présentant une section supérieure au passage laissé libre par le ou l'un des bords d'attaque sont entamés par la vis de forage sur une face latérale et/ou inférieure. Les aliments de taille importante, notamment ceux présentant une section proche de la section de la goulotte d'alimentation, ont la portion centrale de leur partie inférieure déchiquetée par la vis de forage, ce qui contribue également à éclater progressivement cette partie inférieure. Le ou les bords d'attaque peuvent ensuite couper et/ou happer les morceaux détachés ou partiellement détachés, par exemple les morceaux encore retenus par une portion de peau. Les morceaux ainsi obtenus sont ensuite pressés par la vis de pressage. La goulotte d'alimentation débouche sur l'axe de rotation, ce qui veut dire en d'autres termes que l'axe de rotation passe dans la dernière section de la goulotte d'alimentation qui débouche sur l'outil d'extraction de jus.

Les efforts à appliquer par l'utilisateur sont alors réduits par rapport à une introduction directe dans une vis de pressage. On peut ajouter que, dès lors que les aliments à presser sont disloqués en gros morceaux, le couple de rotation à fournir par l'appareil pour entraîner en rotation l'outil d'extraction de jus est limité.

La particularité de la mise en oeuvre ci-dessus est de proposer un outil d'extraction de jus avec une vis de forage et une vis de pressage formant des portions distinctes (de l'outil d'extraction de jus), avec leurs propres filets qui sont chacun adaptés à leur fonction (percer et disloquer les aliments à presser pour la vis de forage, et presser pour la vis de pressage), ce qui permet d'opérer deux opérations distinctes sur les aliments à presser, et limiter les efforts à fournir pour les faire passer dans la goulotte d'alimentation.

Un tel dispositif de préparation d'aliments peut être intégré dans un appareil électroménager de préparation d'aliments dédié à presser des aliments, mais il peut également servir en tant qu'accessoire amovible pour un appareil qui présenterait d'autres fonctions. D'une manière générale, le dispositif est amovible par rapport à un boîtier motorisé de l'appareil pour pouvoir être aisément nettoyé.

Selon l'invention, ledit au moins un bord d'attaque s'étend en périphérie de la vis de forage. Cette disposition permet de simplifier la conception de l'outil d'extraction de jus. De préférence ledit au moins un bord d'attaque est issu de la vis de forage. En complément ou en alternative, ledit au moins un bord d'attaque peut être issu de la vis de pressage.

Avantageusement ledit au moins un bord d'attaque est agencé en périphérie de la moitié inférieure de la vis de forage, et de préférence en périphérie du tiers inférieur de la vis de forage. Cette disposition permet de travailler plus efficacement les aliments avec la vis de forage avant que ceux-ci n'atteignent ledit au moins un bord d'attaque.

Avantageusement, ledit au moins un bord d'attaque est distinct dudit au moins un filet de forage. Cette disposition permet de simplifier la conception de l'outil d'extraction de jus.

Avantageusement la goulotte d'alimentation débouche sur ledit au moins un bord d'attaque. Cette disposition permet de simplifier la conception du dispositif de préparation d'aliments.

Avantageusement, ledit au moins un bord d'attaque s'étend au dessus de la vis de pressage. Cette disposition permet de simplifier la conception de l'outil d'extraction de jus.

Avantageusement, l'axe de rotation de l'outil d'extraction de jus est l'axe de la vis de forage, et/ou l'axe de la vis de pressage.

Avantageusement, la vis de forage présente une extrémité libre d'attaque en regard de la goulotte d'alimentation. Cette extrémité libre d'attaque, similaire à celle d'un foret de perçage, est en regard de la goulotte d'alimentation, ce qui assure que les aliments à presser seront effectivement et directement percés par la vis de forage. En effet, la goulotte d'alimentation présente une section de passage des aliments à presser qui donne directement sur l'extrémité libre d'attaque.

Avantageusement, l'axe de rotation de l'outil d'extraction de jus passe par l'extrémité libre d'attaque de la vis de forage. Cette mise en oeuvre permet de limiter les efforts sur l'appareil, en assurant que les aliments à presser ne sont pas entraînés par une portion excentrique.

Avantageusement, la vis de forage présente un diamètre extérieur en fin de filet de forage inférieur à un diamètre extérieur de la vis de pressage en début de filet de pressage. Cette disposition permet de favoriser l'entraînement des aliments ou des morceaux d'aliments par la vis de pressage.

Avantageusement, ledit au moins un filet de forage de la vis de forage s'étend sur au moins une partie de sa hauteur à l'intérieur de la goulotte d'alimentation. Ainsi la vis de forage rentre au moins partiellement dans la goulotte d'alimentation. Les aliments à presser de taille importante passent alors obligatoirement en contact avec la vis de forage afin que celle-ci les perce et/ou les disloque.

Avantageusement, ledit au moins un filet de forage est discontinu dudit au moins un filet de pressage. Ainsi les filets de forage et de pressage sont complètement indépendants et discontinus les uns des autres.

De préférence, ledit au moins un filet de pressage s'étend jusqu'audit au moins un bord d'attaque. Selon cette mise en oeuvre, les morceaux des aliments à presser sont rapidement happés par ledit au moins un filet de pressage.

Avantageusement, ledit au moins un bord d'attaque s'étend en fin dudit au moins un filet de forage. Cette disposition permet de favoriser la progression des aliments à presser vers la partie inférieure de l'outil d'extraction de jus, c'est-à-dire vers la vis de pressage.

Avantageusement, l'outil d'extraction de jus comprend deux bords d'attaque, et deux filets de pressage qui s'étendent chacun jusqu'à l'un des deux bords d'attaque. En d'autres termes, chacun des filets de pressage prolonge l'un des bords d'attaque. Selon cette mise en oeuvre, les efforts à appliquer pour l'introduction dans la goulotte d'alimentation et pour la découpe d'un fruit entier sont diminués par rapport à une configuration comportant un seul bord d'attaque. Cette disposition contribue également à favoriser le convoyage des morceaux d'aliments passés sous les bords d'attaque vers la deuxième portion de l'outil d'extraction de jus.

De préférence, les deux bords d'attaque sont décalés selon la direction de l'axe de rotation. Selon cette mise en oeuvre, le bord d'attaque inférieur (du côté de la vis de pressage) sert de plan d'appui, et le bord d'attaque supérieur (du côté de la goulotte) peut tronçonner les aliments à presser.

Avantageusement, les bords d'attaque comprennent un bord d'attaque supérieur relevé, agencé du côté de la goulotte d'alimentation, et un bord d'attaque inférieur, agencé du côté de la vis de pressage. L'outil d'extraction de jus selon cette mise en oeuvre permet de réduire les efforts à appliquer pour disloquer des fruits entiers. Cela permet de disloquer ou d'éclater un fruit en train d'être travaillé, plutôt que de le tronçonner ou trancher progressivement. Cette mise en oeuvre avec les bords d'attaque décalés et le bord d'attaque supérieur relevé permet de réduire les efforts à appliquer, car les aliments à presser sont éclatés en morceaux par le bord d'attaque supérieur. Les aliments de taille importante sont ainsi fragmentés plus rapidement, et avec moins d'efforts, pour être ensuite pressés par la vis de pressage. Selon la présente mise en oeuvre, on entend par bord d'attaque supérieur celui qui est le plus proche de la vis de forage, et par bord d'attaque inférieur celui qui est le plus proche de la vis de pressage.

Avantageusement, le bord d'attaque inférieur présente une face supérieure plane. Cette disposition permet de faciliter le sectionnement des morceaux partiellement engagés dans la vis de pressage.

Avantageusement, la goulotte d'alimentation présente une ouverture inférieure vers l'outil d'extraction de jus en regard de la totalité dudit au moins un bord d'attaque. Selon cette mise en oeuvre, la goulotte d'alimentation est agencée avec une ouverture de sortie qui permet d'atteindre la totalité du ou des bord(s) d'attaque. Typiquement, si le bord d'attaque présente un rayon extérieur donné par rapport à l'axe de rotation, alors la goulotte d'alimentation présente un diamètre (au moins en fin de conduit) équivalent au double du rayon du bord d'attaque, c'est-à-dire égal ou supérieur au double du rayon donné en question.

Avantageusement, la goulotte d'alimentation présente un renflement qui entoure la vis de forage. Un tel renflement permet encore de limiter les efforts à appliquer par l'utilisateur car il ménage un espace où peuvent se loger des gros morceaux de fruit disloqués par la vis de forage, avant d'être happés par la vis de pressage, tout en utilisant une goulotte d'alimentation ayant une section d'entrée réduite par rapport au renflement.

Avantageusement, la goulotte d'alimentation comprend des moyens d'arrêt en rotation agencés pour bloquer en rotation des aliments introduits dans la goulotte d'alimentation, notamment au niveau du renflement. Les moyens d'arrêt en rotation améliorent l'efficacité de la fragmentation du pressage car ils empêchent les gros morceaux d'être entraînés en rotation par le ou les bords d'attaque. Bloqués en rotation, les morceaux peuvent être plus facilement sectionnés au moins partiellement par le ou les bords d'attaque.

Avantageusement, les moyens d'arrêt en rotation comprennent au moins une saillie formée sur une face interne de la goulotte d'alimentation. On peut notamment envisager une ou plusieurs nervures à l'intérieur de la goulotte d'alimentation.

Avantageusement, les moyens d'arrêt en rotation s'étendent au moins partiellement dans le renflement.

Avantageusement, la goulotte d'alimentation est agencée pour recevoir et guider des fruits entiers, tels que des pommes.

Avantageusement, la goulotte d'alimentation présente un conduit de guidage d'un diamètre compris entre soixante-dix millimètres et quatre-vingt-dix millimètres, bornes incluses, et plus préférentiellement entre soixante-quinze millimètres et quatre-vingt-cinq millimètres, bornes incluses.

Avantageusement, la vis de pressage est coaxiale avec la goulotte d'alimentation. De préférence, l'outil d'extraction de jus est coaxial avec la goulotte d'alimentation.

Avantageusement, le dispositif de préparation d'aliments comprend un filtre s'étendant au moins en regard dudit au moins un filet de pressage et la vis de pressage est agencée pour pousser contre le filtre les aliments à presser entraînés par ledit au moins un filet de pressage de la première portion de la vis de pressage vers la deuxième portion de la vis de pressage. En alternative la vis de pressage peut notamment être agencée dans un fourreau dépourvu de parties filtrantes. Le filtre et/ou le fourreau peuvent présenter au moins une saillie et/ou une nervure interne coopérant avec le ou les filets de pressage de la vis de pressage.

Selon une forme de réalisation, la vis de forage et la vis de pressage forment un outil d'extraction de jus d'une seule pièce, réalisée par moulage.

Selon une autre forme de réalisation, la vis de forage et la vis de pressage forment deux composants séparés et fixés l'un à l'autre pour former l'outil d'extraction de jus.

Avantageusement, le dispositif de préparation d'aliments comporte un poussoir agencé pour pousser les aliments à presser dans la goulotte d'alimentation.

Avantageusement, le poussoir comprend une face inférieure agencée pour entrer en contact avec les aliments à presser lorsqu'ils sont dans la goulotte d'alimentation, et la face inférieure comprend des saillies anti-rotation, telles que des picots.

Un deuxième aspect de l'invention concerne un appareil électroménager de préparation d'aliments, caractérisé en ce qu'il comprend :
- un boîtier agencé pour reposer sur un plan de travail,
- un dispositif de préparation d'aliments selon l'une au moins des caractéristiques précédentes, monté sur le boîtier,
- un axe d'entraînement agencé sur une partie supérieure du boîtier pour entraîner l'outil d'extraction de jus en rotation autour de l'axe de rotation,
- un moteur électrique agencé pour motoriser l'axe d'entraînement.

Préférentiellement, l'axe d'entraînement est perpendiculaire au plan de travail.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la figure 1 représente une vue en coupe du haut d'un exemple de réalisation d'un dispositif de préparation d'aliments selon l'invention ;
- la figure 2 représente une vue d'un outil d'extraction de jus du dispositif de préparation d'aliments illustré sur la figure 1 ;
- la figure 3 représente une vue isométrique de l'outil d'extraction de jus illustré sur la figure 2.

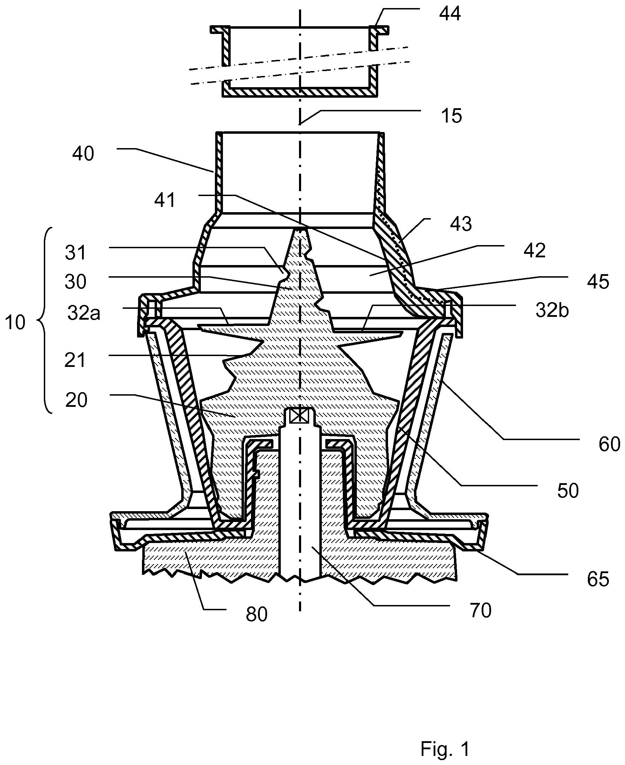

La figure 1 représente une vue partielle du haut d'un appareil comprenant un dispositif de préparation d'aliments selon l'invention. Une tête d'extraction de jus est composée d'un outil d'extraction de jus 10 contenu dans un espace de travail défini par un filtre 50 entouré par un déflecteur 60 et fermé par un couvercle 45 qui comprend une goulotte d'alimentation 40. Un collecteur 65 est agencé sous le filtre 50 et le déflecteur 60. Le collecteur 65 peut comprendre une sortie d'écoulement, non représentée sur les figures. L'outil d'extraction de jus 10 est agencé pour tourner en rotation autour d'un axe de rotation 15 vertical, c'est-à-dire notablement perpendiculaire à un plan de travail sur lequel repose l'appareil d'extraction de jus. La goulotte d'alimentation 40 présente une partie inférieure 42 qui débouche autour de l'axe de rotation 15. Selon une forme de réalisation préférée, l'axe de rotation 15 traverse entièrement la goulotte d'alimentation 40.

L'outil d'extraction de jus 10 est accouplé à un axe d'entraînement 70 qui sort d'un boîtier 80 de l'appareil, et relié à un moteur électrique pour entraîner l'outil d'extraction de jus 10 en rotation autour de l'axe de rotation 15. L'axe d'entraînement 70 est agencé sur une partie supérieure du boîtier 80. Le bas de l'appareil n'est pas représenté, et le collecteur 65, le déflecteur 60, le filtre 50 et l'outil d'extraction de jus 10 sont montés de manière amovible sur le boîtier 80.

L'outil d'extraction de jus 10 comprend un premier étage qui forme une vis de forage 30 avec au moins un filet de forage 31. Il y a sous la vis de forage 30 un deuxième étage qui forme une vis de pressage 20 avec au moins un filet de pressage 21. La vis de forage 30 est agencée pour forer et disloquer les aliments à presser introduits dans la goulotte d'alimentation 40, en particulier des fruits entiers tels que des pommes. La vis de pressage 20 est quant à elle agencée pour ensuite diriger les aliments à presser vers le filtre 50 et les y presser, pour extraire des jus.

Entre la vis de forage 30 et la vis de pressage 20 se trouvent deux bords d'attaque 32a, 32b, décalés en hauteur l'un par rapport à l'autre. Ces bords d'attaque 32a, 32b améliorent l'éclatement de fruits introduits dans la goulotte d'alimentation 40. En effet, un premier bord d'attaque 32a (celui décalé vers le haut, du côté de la goulotte d'alimentation 40) est relevé et éclate les fruits, tandis que l'autre bord d'attaque 32b (décalé vers le bas, du côté de la vis de pressage) sert d'appui aux aliments.

Le forage et la dislocation préalables au pressage permettent de limiter les efforts à exercer par l'utilisateur sur les aliments introduits dans la goulotte d'alimentation 40 qui est directement en regard et coaxiale à l'outil d'extraction de jus 10. On peut envisager d'utiliser un poussoir 44 pour éviter tout contact entre l'utilisateur et l'outil d'extraction de jus 10. La goulotte d'alimentation 40 est adaptée pour accueillir des fruits entiers tels que des pommes par exemple, et présente à cet effet un diamètre compris entre soixante-quinze et quatre-vingt-cinq millimètres.

La vis de forage 30 est conique et possède une extrémité libre d'attaque en sa partie supérieure, en regard de la goulotte d'alimentation 40. Ainsi, tous les aliments à presser qui sont introduits dans la goulotte d'alimentation 40 entrent directement en contact avec la vis de forage et son extrémité libre d'attaque.

Afin d'augmenter l'efficacité du forage et de la dislocation préalables au pressage, la vis de forage 30 rentre partiellement dans la goulotte d'alimentation 40. A ce niveau, on peut remarquer un renflement 43 de la goulotte d'alimentation 40, dans sa partie basse, pour laisser de la place aux gros morceaux issus de la dislocation de fruits ou gros aliments à presser, avant qu'ils ne soient happés par la vis de pressage 20. Ainsi, avec la place ménagée par le renflement 43 de la goulotte d'alimentation 40, l'utilisateur n'a pas à fournir d'effort de poussée supplémentaire pour le passage des gros morceaux vers la vis de pressage 20.

On peut, toujours dans ce but de limiter les efforts de poussée, implanter au moins une saillie 41, telle que la nervure représentée, à l'intérieur de la goulotte d'alimentation 40 ou de son renflement 43, pour arrêter en rotation les aliments ou les gros morceaux, pour que sous l'effet de la vis de forage 30, ils soient directement guidés axialement vers la vis de pressage 20.

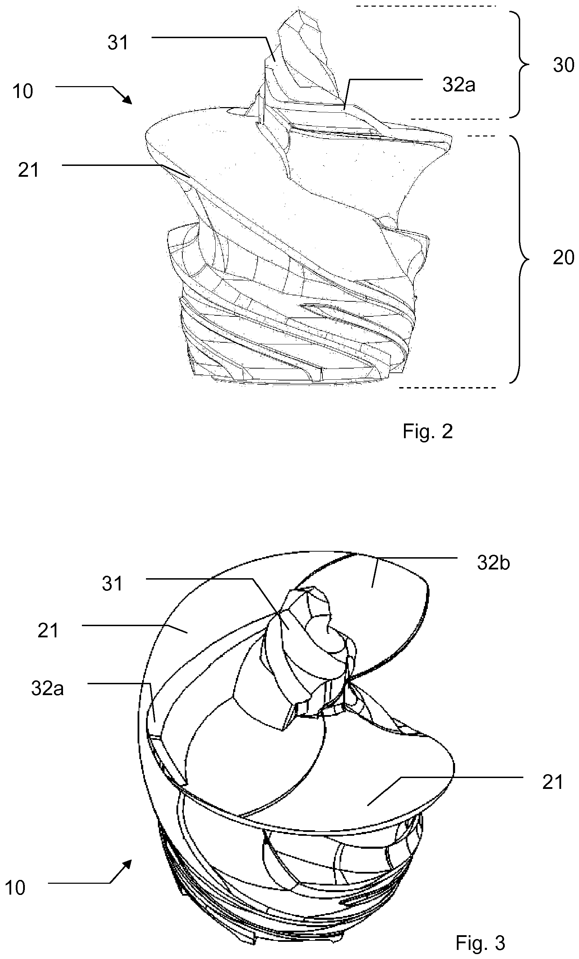

La figure 2 représente l'outil d'extraction de jus 10 de la figure 1. La vis de forage 30 comprend trois filets de forage 31, et la vis de pressage 20 comprend plusieurs filets de pressage 21. En fin de filet de forage 31, il est prévu des bords d'attaque 32a, 32b. La vis de pressage 20 comprend deux filets de pressage 21 principaux s'étendant jusqu'aux bords d'attaque 32a, 32b. Ainsi chaque filet de pressage 21 principal s'étend jusqu'à l'un des bords d'attaque 32a, 32b.

Le bord d'attaque 32a visible est relevé, ce qui permet de débiter les aliments à presser qui viennent d'être forés par la vis de forage 30, et ainsi les disloquer en gros morceaux. On peut également envisager d'implanter un bord d'attaque 32b plat, afin de supporter une périphérie inférieure du fruit à presser, pendant que le bord d'attaque 32a relevé le débite.

Tel que bien visible sur les figures 1 à 3, les bords d'attaque 32a, 32b s'étendent en périphérie de la vis de forage 30. Plus particulièrement, les bords d'attaque 32a, 32b sont agencés en périphérie de la moitié inférieure de la vis de forage 30, et de préférence en périphérie du tiers inférieur de la vis de forage 30.

Tel que bien visible sur les figures 1 à 3, les bords d'attaque 32a, 32b sont distincts des filets de forage 31.

Tel que bien visible sur la figure 1, la goulotte d'alimentation 40 débouche sur les bords d'attaque 32a, 32b.

Tel que bien visible sur les figures 1 à 3, les bords d'attaque 32a, 32b s'étendent au dessus de la vis de pressage 20.

On constate que l'outil d'extraction de jus 10 est monobloc, il peut être réalisé par moulage par exemple.

En alternative, on peut envisager de réaliser une pièce formant la vis de forage 30 et une autre pièce formant la vis de pressage 20, ces deux pièces distinctes étant ensuite fixées l'un à l'autre pour former l'outil d'extraction de jus 10.

La figure 3 représente en perspective l'outil d'extraction de jus 10 de la figure 2. Le bord d'attaque 32a supérieur et relevé est bien visible, en fin de filet de forage 31, et le bord d'attaque 32b inférieur est visible derrière la vis de forage 30. Le bord d'attaque 32b inférieur est sensiblement plat pour fournir un appui à un fruit en train d'être foré et en train d'être débité/disloqué par le bord d'attaque 32a supérieur.

On peut noter aussi que la vis de forage 30 présente un diamètre nettement plus petit que le diamètre de la vis de pressage 20, les filets de forage 31 n'étant pas continus avec les filets de pressage 21. Les deux fonctions (forage et pressage) sont réalisées par des parties bien distinctes de l'outil d'extraction de jus 10, pour être chacune optimisée.

Le dispositif de préparation d'aliments illustré sur les figures 1 à 3 fonctionne et s'utilise de la manière suivante.

Les aliments introduits dans la goulotte d'alimentation 40 peuvent être poussés par le poussoir 44. Les aliments de petit calibre présentant une section inférieure au passage ménagé entre la vis de forage 30 et la goulotte d'alimentation 40 et aux passages ménagés par les bords d'attaque 32a, 32b peuvent atteindre directement la vis de pressage 20. Les aliments de calibre plus important, notamment les pommes entières, sont attaqués à leur base par les filets de forage 31 de la vis de forage 30 qui tendent à fendre et à éclater leur base. Le bord d'attaque 32a relevé permet de sectionner des morceaux de l'aliment retenu par les saillies 41, alors que l'autre bord d'attaque 32b plan peut porter ledit aliment. L'aliment est ainsi rapidement débité en morceaux pouvant être entrainés par les filets de pressage 21 de la vis de pressage 20. Le dispositif de préparation d'aliments selon l'invention permet de presser des aliments de calibre important, avec un effort de poussé limité de la part de l'utilisateur, sans nécessiter une prédécoupe en morceaux.

A titre de variante, le bord d'attaque 32a supérieur n'est pas nécessairement relevé et/ou le bord d'attaque 32b inférieur n'est pas nécessairement plan.

A titre de variante, les bords d'attaque 32a, 32b ne sont pas nécessairement décalés en hauteur l'un par rapport à l'autre par rapport à l'axe de rotation 15.

A titre de variante, l'outil d'extraction de jus 10 ne comporte pas nécessairement deux bords d'attaque 32a, 32b, mais peut comporter au moins un bord d'attaque s'étendant entre la vis de forage 30 et la vis de pressage 20, la goulotte d'alimentation 40 débouchant sur ledit au moins un bord d'attaque.

A titre de variante, la vis de pressage 20 ne comporte pas nécessairement deux filets de pressage 21 principaux, mais peut comporter au moins un filet de pressage 21 principal. De préférence, le ou au moins l'un des filets de pressage 21 principaux s'étend jusqu'à un ou l'un des bords d'attaque 32a, 32b.

A titre de variante, la vis de pressage 20 n'est pas nécessairement agencée dans un filtre 50. La vis de pressage 20 peut notamment être agencée dans un fourreau dépourvu de parties filtrantes. Le filtre et/ou le fourreau peuvent présenter au moins une saillie et/ou une nervure interne coopérant avec le ou les filets de pressage de la vis de pressage.

A titre de variante, le couvercle 45 n'est pas nécessairement verrouillé sur le filtre 50 ou sur un fourreau. Le couvercle 45 peut notamment être verrouillé sur un bol logeant le filtre 50 ou un fourreau.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées.

## Revendications

1. Dispositif de préparation d'aliments comprenant :
- une goulotte d'alimentation (40), et
- un outil d'extraction de jus (10) agencé pour tourner en rotation autour d'un axe de rotation (15), avec une partie formant une vis de pressage (20) avec au moins un filet de pressage (21) formé à la surface de la vis de pressage (20) agencé pour entraîner des aliments à presser d'une première portion de l'outil d'extraction de jus (10) vers une deuxième portion de l'outil d'extraction de jus (10),
la goulotte d'alimentation (40) présentant une partie inférieure (42) qui débouche autour de l'axe de rotation (15),
l'outil d'extraction de jus (10) comprenant, en amont de la première portion de l'outil d'extraction de jus (10), un premier étage formant une vis de forage (30) avec au moins un filet de forage (31) formé à la surface de la vis de forage (30) agencé pour forer et disloquer des aliments venant de la goulotte d'alimentation (40) et les guider de la goulotte d'alimentation (40) vers la vis de pressage (20),
ledit au moins un filet de pressage (21) étant distinct dudit au moins un filet de forage (31),
**caractérisé en ce que** l'outil d'extraction de jus (10) comprend au moins un bord d'attaque (32a, 32b) entre ledit au moins un filet de forage (31) et ledit au moins un filet de pressage (21), et **en ce que** ledit au moins un bord d'attaque (32a, 32b) s'étend en périphérie de la vis de forage (30).

2. Dispositif de préparation d'aliments selon la revendication 1, **caractérisé en ce que** ledit au moins un bord d'attaque (32a, 32b) est agencé en périphérie de la moitié inférieure de la vis de forage (30), et de préférence en périphérie du tiers inférieur de la vis de forage (30).

3. Dispositif de préparation d'aliments selon l'une des revendications 1 ou 2, **caractérisé en ce que** ledit au moins un bord d'attaque (32a, 32b) est distinct dudit au moins un filet de forage (31).

4. Dispositif de préparation d'aliments selon l'une des revendications 1 à 3, **caractérisé en ce que** la goulotte d'alimentation (40) débouche sur ledit au moins un bord d'attaque (32a, 32b).

5. Dispositif de préparation d'aliments selon l'une des revendications 1 à 4, **caractérisé en ce que** ledit au moins un bord d'attaque (32a, 32b) s'étend au dessus de la vis de pressage (20).

6. Dispositif de préparation d'aliments selon l'une des revendications 1 à 5, **caractérisé en ce que** l'axe de rotation de l'outil d'extraction de jus (10) passe par l'extrémité libre d'attaque de la vis de forage (30).

7. Dispositif de préparation d'aliments selon l'une des revendications 1 à 6, **caractérisé en ce que** la vis de forage (30) présente un diamètre extérieur en fin de filet de forage (31) inférieur à un diamètre extérieur de la vis de pressage (20) en début de filet de pressage (21).

8. Dispositif de préparation d'aliments selon l'une des revendications 1 à 7, **caractérisé en ce que** ledit au moins un filet de forage (31) de la vis de forage (30) s'étend sur au moins une partie de sa hauteur à l'intérieur de la goulotte d'alimentation (40).

9. Dispositif de préparation d'aliments selon l'une des revendications 1 à 8, **caractérisé en ce que** ledit au moins un filet de forage (31) est discontinu dudit au moins un filet de pressage (21).

10. Dispositif de préparation d'aliments selon l'une des revendications 1 à 9, **caractérisé en ce que** ledit au moins un filet de pressage (21) s'étend jusqu'audit au moins un bord d'attaque (32a, 32b).

11. Dispositif de préparation d'aliments selon l'une des revendications 1 à 10, **caractérisé en ce que** ledit au moins un bord d'attaque (32a, 32b) s'étend en fin dudit au moins un filet de forage (31).

12. Dispositif de préparation d'aliments selon l'une des revendications 1 à 11, **caractérisé en ce que** l'outil d'extraction de jus (10) comprend :
- deux bords d'attaque (32a, 32b),
- deux filets de pressage (21) qui s'étendent chacun jusqu'à l'un des deux bords d'attaque (32a, 32b),
et **en ce que** les bords d'attaque (32a, 32b) sont décalés selon la direction de l'axe de rotation (15).

13. Dispositif de préparation d'aliments selon la revendication 12, **caractérisé en ce que** les bords d'attaque (32a, 32b) comprennent un bord d'attaque (32a) supérieur relevé, agencé du côté de la goulotte d'alimentation (40), et un bord d'attaque (32b) inférieur, agencé du côté de la vis de pressage (20).

14. Dispositif de préparation d'aliments selon la revendication 13, **caractérisé en ce que** le bord d'attaque (32b) inférieur présente une face supérieure plane.

15. Dispositif de préparation d'aliments selon l'une des revendications 1 à 14, **caractérisé en ce que** la goulotte d'alimentation (40) présente une ouverture inférieure vers l'outil d'extraction de jus (10) en regard de la totalité dudit au moins un bord d'attaque (32a, 32b).

16. Dispositif de préparation d'aliments selon l'une des revendications 1 à 15, **caractérisé en ce que** la goulotte d'alimentation (40) présente un renflement (43) qui entoure la vis de forage (30).

17. Dispositif de préparation d'aliments selon l'une des revendications 1 à 16, **caractérisé en ce que** la goulotte d'alimentation (40) comprend des moyens d'arrêt en rotation agencés pour bloquer en rotation des aliments introduits dans la goulotte d'alimentation (40).

18. Dispositif de préparation d'aliments selon la revendication 17, **caractérisé en ce que** les moyens d'arrêt en rotation comprennent au moins une saillie (41) formée sur une face interne de la goulotte d'alimentation (40).

19. Dispositif de préparation d'aliments selon l'une des revendications 17 ou 18 dans leur dépendance à la revendication 16, **caractérisé en ce que** les moyens d'arrêt en rotation s'étendent au moins partiellement dans le renflement (43).

20. Dispositif de préparation d'aliments selon l'une des revendications 1 à 19, **caractérisé en ce qu'**il comprend un filtre (50) s'étendant au moins en regard dudit au moins un filet de pressage (21) et **en ce que** la vis de pressage (20) est agencée pour pousser contre le filtre (50) les aliments à presser entraînés par ledit au moins un filet de pressage (21) de la première portion de la vis de pressage (20) vers la deuxième portion de la vis de pressage (20).

21. Dispositif de préparation d'aliments selon l'une des revendications 1 à 20, **caractérisé en ce qu'**il comporte un poussoir (44) agencé pour pousser les aliments à presser dans la goulotte d'alimentation (40).

22. Appareil électroménager de préparation d'aliments, **caractérisé en ce qu'**il comprend :
- un boîtier (80) agencé pour reposer sur un plan de travail,
- un dispositif de préparation d'aliments selon l'une des revendications 1 à 21, monté sur le boîtier (80),
- un axe d'entraînement (70) agencé sur une partie supérieure du boîtier (80) pour entraîner l'outil d'extraction de jus (10) en rotation autour de l'axe de rotation (15),
- un moteur électrique agencé pour motoriser l'axe d'entraînement (70).

## Patentansprüche

1. Vorrichtung zur Zubereitung von Nahrungsmitteln, umfassend:
- eine Zufuhrrutsche (40) und
- ein Saftextraktionswerkzeug (10), das angeordnet ist, um sich drehbar um eine Drehachse (15) zu drehen, wobei ein Abschnitt eine Pressschraube (20) mit mindestens einem Pressgewinde (21) bildet, das auf der Oberfläche der Pressschraube (20) ausgebildet ist und angeordnet ist, um zu pressende Nahrungsmittel von einem ersten Abschnitt des Saftextraktionswerkzeugs (10) zu einem zweiten Abschnitt des Saftextraktionswerkzeugs (10) anzutreiben,
wobei die Zufuhrrutsche (40) einen unteren Abschnitt (42) aufweist, der um die Drehachse (15) mündet,
wobei das Saftextraktionswerkzeug (10) stromaufwärts des ersten Abschnitts des Saftextraktionswerkzeugs (10) eine erste Stufe umfasst, die eine Bohrschraube (30) mit mindestens einem Bohrgewinde (31) bildet, das auf der Oberfläche der Bohrschraube (30) ausgebildet ist und angeordnet ist, um Nahrungsmittel, die von der Zufuhrrutsche (40) kommen, zu durchbohren und zu entfernen und sie von der Zufuhrrutsche (40) zu der Pressschraube (20) zu führen,
wobei das mindestens eine Pressgewinde (31) von dem mindestens einen Bohrgewinde (31) verschieden ist,
**dadurch gekennzeichnet, dass** das Saftextraktionswerkzeug (10) mindestens eine Vorderkante (32a, 32b) zwischen dem mindestens einen Bohrgewinde (31) und dem mindestens einen Pressgewinde (21) umfasst,
und dass sich die mindestens eine Vorderkante (32a, 32b) am Umfang der Bohrschraube (30) erstreckt.

2. Vorrichtung zur Zubereitung von Nahrungsmitteln nach Anspruch 1, **dadurch gekennzeichnet, dass** die mindestens eine Vorderkante (32a, 32b) am Umfang der unteren Hälfte der Bohrschraube (30) und vorzugsweise am Umfang des unteren Drittels der Bohrschraube (30) angeordnet ist.

3. Vorrichtung zur Zubereitung von Nahrungsmitteln nach einem der Ansprüche 1 oder 2, **dadurch gekennzeichnet, dass** sich die mindestens eine Vorderkante (32a, 32b) von dem mindestens einen Bohrgewinde (31) unterscheidet.

4. Vorrichtung zur Zubereitung von Nahrungsmitteln nach einem der Ansprüche 1 bis 3, **dadurch gekennzeichnet, dass** die Zufuhrrutsche (40) an der mindestens einen Vorderkante (32a, 32b) mündet.

5. Vorrichtung zur Zubereitung von Nahrungsmitteln nach einem der Ansprüche 1 bis 4, **dadurch gekennzeichnet, dass** sich die mindestens eine Vorderkante (32a, 32b) oberhalb der Pressschraube (20) erstreckt.

6. Vorrichtung zur Zubereitung von Nahrungsmitteln nach einem der Ansprüche 1 bis 5, **dadurch gekennzeichnet, dass** die Drehachse des Saftextraktionswerkzeugs (10) durch das freie Vorderende der Bohrschraube (30) verläuft.

7. Vorrichtung zur Zubereitung von Nahrungsmitteln nach einem der Ansprüche 1 bis 6, **dadurch gekennzeichnet, dass** die Bohrschraube (30) am Ende des unteren Bohrgewindes (31) einen Außendurchmesser aufweist, der kleiner als ein Außendurchmesser der Pressschraube (20) am Anfang des Pressfadens (21) ist.

8. Vorrichtung zur Zubereitung von Nahrungsmitteln nach einem der Ansprüche 1 bis 7, **dadurch gekennzeichnet, dass** sich das mindestens eine Bohrgewinde (31) der Bohrschraube (30) mindestens über einen Abschnitt seiner Höhe im Inneren der Zufuhrrutsche (40) erstreckt.

9. Vorrichtung zur Zubereitung von Nahrungsmitteln nach einem der Ansprüche 1 bis 8, **dadurch gekennzeichnet, dass** das mindestens eine Bohrgewinde (31) von dem mindestens einen Pressfaden (21) unterbrochen ist.

10. Vorrichtung zur Zubereitung von Nahrungsmitteln nach einem der Ansprüche 1 bis 9, **dadurch gekennzeichnet, dass** der mindestens eine Pressfaden (21) sich bis zu der mindestens einen Vorderkante (32a, 32b) erstreckt.

11. Vorrichtung zur Zubereitung von Nahrungsmitteln nach einem der Ansprüche 1 bis 10, **dadurch gekennzeichnet, dass** sich die mindestens eine Vorderkante (32a, 32b) am Ende des mindestens einen Bohrgewindes (31) erstreckt.

12. Vorrichtung zur Zubereitung von Nahrungsmitteln nach einem der Ansprüche 1 bis 11, **dadurch gekennzeichnet, dass** das Saftextraktionswerkzeug (10) umfasst:
- zwei Vorderkanten (32a, 32b),
- zwei Pressfäden (21), die sich jeweils bis zu einer der beiden Vorderkanten (32a, 32b) erstrecken,
und dass die Vorderkanten (32a, 32b) in Richtung der Drehachse (15) versetzt sind.

13. Vorrichtung zur Zubereitung von Nahrungsmitteln nach Anspruch 12, **dadurch gekennzeichnet, dass** die Vorderkanten (32a, 32b) eine erhöhte obere Vorderkante (32a), die an der Seite der Zufuhrrutsche (40) angeordnet ist, und eine untere Vorderkante (32b) umfassen, die auf der Seite der Pressschraube (20) angeordnet ist.

14. Vorrichtung zur Zubereitung von Nahrungsmitteln nach Anspruch 13, **dadurch gekennzeichnet, dass** die untere Vorderkante (32b) eine ebene Oberseite aufweist.

15. Vorrichtung zur Zubereitung von Nahrungsmitteln nach einem der Ansprüche 1 bis 14, **dadurch gekennzeichnet, dass** die Zufuhrrutsche (40) eine untere Öffnung zu dem Saftextraktionswerkzeug (10) aufweist, das der gesamten mindestens einen Vorderkante (32a, 32b) gegenüberliegt.

16. Vorrichtung zur Zubereitung von Nahrungsmitteln nach einem der Ansprüche 1 bis 15, **dadurch gekennzeichnet, dass** die Zufuhrrutsche (40) eine die Bohrschraube (30) umgebende Ausbuchtung (43) aufweist.

17. Vorrichtung zur Zubereitung von Nahrungsmitteln nach einem der Ansprüche 1 bis 16, **dadurch gekennzeichnet, dass** die Zufuhrrutsche (40) Drehanschlagmittel umfasst, die angeordnet sind, um Nahrungsmittel (40), die in die Zufuhrrutsche eingeführt sind, bei der Drehung zu blockieren.

18. Vorrichtung zur Zubereitung von Nahrungsmitteln nach Anspruch 17, **dadurch gekennzeichnet, dass** die Drehanschlagmittel mindestens einen Vorsprung (41) umfassen, der an einer Innenseite der Zufuhrrutsche (40) ausgebildet ist.

19. Vorrichtung zur Zubereitung von Nahrungsmitteln nach einem der Ansprüche 17 oder 18 in Abhängigkeit von Anspruch 16, **dadurch gekennzeichnet, dass** die Drehanschlagmittel sich zumindest teilweise in der Auswölbung (43) erstrecken.

20. Vorrichtung zur Zubereitung von Nahrungsmitteln nach einem der Ansprüche 1 bis 19, **dadurch gekennzeichnet, dass** sie einen Filter (50) umfasst, der sich mindestens gegenüber dem mindestens einen Pressfaden (21) erstreckt und dass die Pressschraube (20) angeordnet ist, um die zu pressenden Nahrungsmittel, die durch den mindestens einen Pressfaden (21) des ersten Abschnitts der Pressschraube (20) angetrieben werden, gegen den Filter (50) zu dem zweiten Abschnitt der Pressschraube (20) zu drücken.

21. Vorrichtung zur Zubereitung von Nahrungsmitteln nach einem der Ansprüche 1 bis 20, **dadurch gekennzeichnet, dass** sie einen Schieber (44) aufweist, der angeordnet ist, um die zu pressenden Nahrungsmittel in die Zufuhrrutsche (40) zu drücken.

22. Elektrisches Haushaltsgerät für die Zubereitung von Nahrungsmitteln, **dadurch gekennzeichnet, dass** es umfasst:
- ein Gehäuse (80), das angeordnet ist, auf einer Arbeitsfläche aufzuliegen,
- ein Gerät zur Zubereitung von Nahrungsmitteln nach einem der Ansprüche 1 bis 21, das auf dem Gehäuse (80) montiert ist,
- eine Antriebswelle (70), die an einem oberen Abschnitt des Gehäuses (80) angeordnet ist, um das Saftextraktionswerkzeug (10) um die Drehachse (15) in Drehung anzutreiben,
- einen Elektromotor, der angeordnet ist, um die Antriebswelle (70) zu motorisieren.

## Claims

1. Food preparation device comprising:
- a feed chute (40) and
- a juice extraction tool (10) arranged to rotate about an axis of rotation (15), with a part forming a pressing screw (20) with at least one pressing thread (21) formed on the surface of the pressing screw (20) arranged so as to guide the food to be pressed from a first portion of the juice extraction tool (10) to a second portion of the juice extraction tool (10),
the feed chute (40) having a lower part (42) which runs around the axis of rotation (15),
the juice extraction tool (10) comprising, upstream of the first portion of the juice extraction tool (10), a first tier forming a boring screw (30) with at least one boring thread (31) formed on the surface of the boring screw (30) which is arranged to bore into and break up food coming from the feed chute (40) and guide it from the feed chute (40) towards the pressing screw (20),
said at least one pressing thread (21) being distinct from said at least one boring thread (31),
**characterised in that** the juice extraction tool (10) comprises at least one leading edge (32a, 32b) between said at least one boring thread (31) and said at least one pressing thread (21),
and **in that** said at least one leading edge (32a, 32b) extends peripherally from the boring screw (30).

2. Food preparation device according to claim 1, **characterised in that** said at least one leading edge (32a, 32b) is arranged peripherally from the lower half of the boring screw (30) and preferably peripherally from the lower third of the boring screw (30).

3. Food preparation device according to any of claims 1 or 2, **characterised in that** said at least one leading edge (32a, 32b) is distinct from said at least one boring thread (31).

4. Food preparation device according to any of claims 1 to 3, **characterised in that** the feed chute (40) leads to said at least one leading edge (32a, 32b).

5. Food preparation device according to any of claims 1 to 4, **characterised in that** said at least one leading edge (32a, 32b) extends above the pressing screw (20).

6. Food preparation device according to any of claims 1 to 5, **characterised in that** the axis of rotation of the juice extraction tool (10) passes through the free striking end of the boring screw (30).

7. Food preparation device according to any of claims 1 to 6, **characterised in that** the boring screw (30) has an external diameter at the end of the boring thread (31) which is smaller than an external diameter of the pressing screw (20) at the beginning of the pressing thread (21).

8. Food preparation device according to any of claims 1 to 7, **characterised in that** said at least one boring thread (31) of the boring screw (30) extends over at least a portion of its height inside the feed chute (40).

9. Food preparation device according to any of claims 1 to 8, **characterised in that** said at least one boring thread (31) is discontinued from said at least one pressing thread (21).

10. Food preparation device according to any of claims 1 to 9, **characterised in that** said at least one pressing thread (21) extends up to said at least one leading edge (32a, 32b).

11. Food preparation device according to any of claims 1 to 10, **characterised in that** said at least one leading edge (32a, 32b) extends at the end of said at least one boring thread (31).

12. Food preparation device according to any of claims 1 to 11, **characterised in that** the juice extraction tool (10) comprises:
- two leading edges (32a, 32b),
- two pressing threads (21) which each extend up to one of the two leading edges (32a, 32b),
and **in that** the leading edges (32a, 32b) are offset relative to the direction of the axis of rotation (15).

13. Food preparation device according to claim 12, **characterised in that** the leading edges (32a, 32b) comprise an upper raised leading edge (32a), arranged on the side of the feed chute (40), and a lower leading edge (32b), arranged on the side of the pressing screw (20).

14. Food preparation device according to claim 13, **characterised in that** the lower leading edge (32b) has a planar upper surface.

15. Food preparation device according to any of claims 1 to 14, **characterised in that** the feed chute (40) has a lower opening towards the juice extraction tool (10) facing the whole of said at least one leading edge (32a, 32b).

16. Food preparation device according to any of claims 1 to 15, **characterised in that** the feed chute (40) has a bulge (43) which surrounds the boring screw (30).

17. Food preparation device according to any of claims 1 to 16, **characterised in that** the feed chute (40) comprises means for preventing rotational motion for stopping the rotation of food introduced into the feed chute (40).

18. Food preparation device according to claim 17, **characterised in that** the means for preventing rotational motion comprise at least one projection (41) formed on an inner face of the feed chute (40).

19. Food preparation device according to any of claims 17 or 18, insofar as they are dependent on claim 16, **characterised in that** the means for preventing rotational motion extend at least partially into the bulge (43).

20. Food preparation device according to any of claims 1 to 19, **characterised in that** it comprises a filter (50) extending at least opposite said at least one pressing thread (21) and **in that** the pressing screw (20) is arranged to push the food to be pressed against the filter (50), the food being driven by said at least one pressing thread (21) from the first portion of the pressing screw (20) to the second portion of the pressing screw (20).

21. Food preparation device according to any of claims 1 to 20, **characterised in that** it comprises a push rod (44) for pushing the food to be pressed into the feed chute (40).

22. Household appliance for the preparation of food, **characterised in that** it comprises:
- a housing (80) arranged to be placed on a work surface,
- a food preparation device according to any of claims 1 to 21 which is mounted on the housing (80),
- a drive axis (70) arranged on an upper part of the housing (80) for driving the juice extraction tool (10) in rotation about the axis of rotation (15),
- an electric motor for motorising the drive axis (70).
